# EUROPEAN PATENT SPECIFICATION

(11) **EP 3 477 676 B1**
(45) Date of publication and mention of the grant of the patent: **01.04.2020**
(21) Application number: 18202167.5
(22) Date of filing: 23.10.2018
(51) Int. Cl.: H01H 50/04

(54) **ELECTRICAL RELAY WITH MOUNTING BRACKET**
ELEKTRISCHES RELAIS MIT MONTAGEHALTERUNG
RELAIS ÉLECTRIQUE AVEC SUPPORT DE MONTAGE

(30) Priority: 25.10.2017 GB 201717557
(43) Date of publication of application: 01.05.2019
(73) Proprietor: Albright International Limited, Whitchurch, Hampshire RG28 7BB (GB)
(72) Inventor: Sheridan, Michael, Whitchurch, Hampshire RG28 7BB (GB)
(74) Representative: CSY London

(56) References cited:
- DE-A1- 2 449 978
- DE-U- 1 932 727
- US-B2- 7 911 304

## Description

The present invention relates to the field of electrical relays such as heavy-duty relays, also known as contactors. In particular the invention relates to a relay and mounting bracket combination which permits the relay to be mounted on a surface or panel in one of a plurality of angular rotational orientations with respect to the bracket.

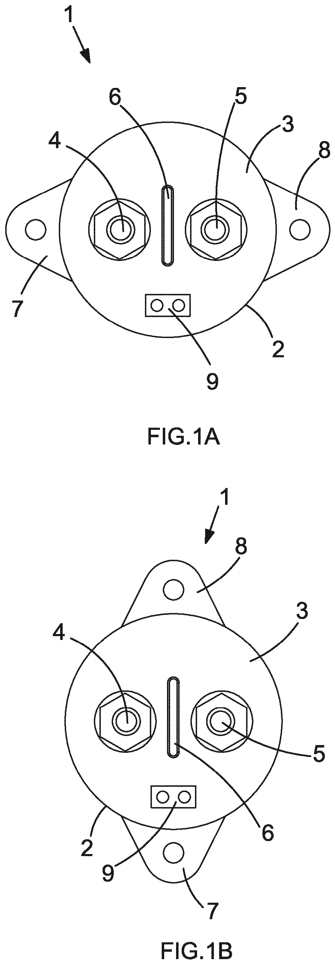

Devices such as contactors or heavy duty relays generally have mounting brackets or mounting holes the position of which is fixed in relation to other important features of the device such as the main terminals or coil terminals. Two examples of relays having fixed bracket orientations (90 degrees rotational variation) are shown in figures 1A and 1B. Of course the fixed positions of the bracket mounting holes with respect to the terminal locations or orientations do not always suit the layout of the panel or represent the best orientation for the device's terminals to be connected with external electrical connectors in a circuit. This can be a problem if, for example, the brackets have been pre-bored, or pre-bored with insufficient precision, or if there is insufficient space for alternative bore orientations to be formed.

One solution is to make several variants of the relay brackets with each having a different relay orientation, but this is expensive and requires stockists or installers to maintain a range of brackets. Alternatively a bracket with multiple attachment bores (i.e. having a large amount of rotational symmetry) could be made, but this may render the bracket too bulky to fit in spatially constrained locations.

The present invention seeks to provide a relay and mounting bracket combination which permits an installer to select one of a range of relay rotational orientations with respect to the associated mounting bracket, but without the aforementioned cost and bulk compromises.

DE-A-2449978 (Rausch & Pausch) and DE 19 32 727 U disclose relays and mounting bracket combinations according to the preamble of claim 1, in which the relay bodies may be detached from the bracket and re-attached in an alternative orientation.

According to one aspect of the invention there is provided a relay and mounting bracket combination comprising a relay having a body with a longitudinal axis defined between a terminal end portion provided with one or more electrical terminal connectors and a base end portion adapted for engagement with the bracket, wherein the bracket is provided with one or more attachment features which facilitate the mounting of the bracket to an external object or surface when the bracket is engaged with the base end portion of the relay.

The engagement between the base end portion and the bracket is made by the inter-engagement of one or more protruding nubs with one or more constraint features thereby providing axial constraint against withdrawing of the base end portion from engagement with the bracket, said one or more nubs and one or more constraint features being configured so as to be capable of co-operating at any one of a plurality of rotational orientations of the base end portion with respect to the bracket, whereby the relay may be mounted on the bracket in a selected one of a plurality of rotational orientations. The bracket comprises a member defining a generally cylindrical aperture or seat sized to accommodate the base end portion in each of the rotational orientations thereof with respect to the bracket.

The one or more nubs are typically provided on or in the relay base end portion. The one or more constraint features are typically provided on or in the mounting bracket.

The bracket member may preferably be generally annular in form. The aperture or seat is preferably provided with said one or more constraint feature, for example on an inner surface of said seat or aperture.

Said one or more protruding nubs are preferably radially extending and can be any shape which permits it to snag a counterpart constraint feature. Said one or more protruding nubs may be radially extending from the base end portion, for example radially extending outwardly from an outside surface of the base end portion.

In a preferred arrangement a constraint feature comprises an annular lip or shoulder provided on or in the annular aperture or seat of the bracket. The one or more nubs may be provided projecting radially outward from the base end portion of the relay.

The lip or shoulder thus provides constraint against axial displacement of the nub or nubs through a continuous range of relay body rotational positions with respect to the bracket. Of course the annular lip or shoulder may be interrupted by one or more bypass features (such as axial slots) which permit the nub or nubs to bypass the constraint feature before being rotated and drawn back into engagement under the lip or against the shoulder.

At least a portion of the nub-facing side of the lip or shoulder may be provided with a surface treatment which promotes mechanical keying of the nub and lip or shoulder, such as surface roughening or texturing, and/or the nub itself may also be provided with a surface treatment for the same purpose. The surface treatment may be the provision of inter-engaging surface features, such as saw tooth profile elements.

In another preferred arrangement the constraint features may comprise a series of circumferentially spaced-apart discrete recesses formed on an inside wall of the bracket aperture or seat. The engagement of a nub and a recess provides constraint against axial movement of the nub and each recess corresponds to a discrete rotational position of the relay body with respect to the bracket. There may be at least four such recesses, preferably at least 8, and more preferably at least 12.

Each recess typically comprises a roof portion which provides axial constraint. There may be side walls which provide rotational constraint, and an open base portion which permits entry of the nub into the recess.

The nubs are preferably each sized and configured to be a sliding fit in each recess.

In another aspect of the invention the one or more nubs have an axial depth which is greater than an axial space provided between the associated constraint feature and a surface to which the bracket is to be mounted. Thus when the bracket is placed base edge-on to the surface and fixed with the base edge flush to the surface, a nub in the constraint feature will be compressed between the constraint feature and the flush surface. In this way the nub or nubs may be clamped tightly against movement.

In yet another aspect of the invention one or more open slots are provided for the nub or nubs to bypass the constraint feature when rotationally aligned with the open slot or slots, after which the nub or nubs may be rotationally displaced (by rotating the relay with respect to the bracket) so as to become aligned with a position in which the nub or nubs can be axially constrained by a constraint feature or features. The relay and bracket are then moved axially apart so that the nub or nubs enter into the appropriate constraint feature or features.

The bracket is preferably a generally annular member having an inside surface which defines the aforementioned annular aperture. Said one or more open slots may be provided in said inside surface, and said one or more nubs may be provided projecting radially outwardly from the base end portion of the relay.

In a preferred arrangement there are two slots and two corresponding nubs, which slots and nubs may be positioned in a diametrically opposed configuration.

The base end portion of the relay body may be generally cylindrical. The body is preferably sized (typically the outside diameter) to be a sliding fit in the annular aperture. The constraint feature or features may be provided on the inside surface of the annular aperture.

The bracket is preferably a unitary member, so as to provide simplicity and no assembly at the point of installation (other than engagement with the relay).

The bracket attachment features may comprise two or more radial, outwardly projecting cheek portions. Each cheek may be provided with a bore in which a screw, bolt or rivet may be disposed for fixing to an underlying surface. Other fixing means may be utilized such as gluing, or brazing or spot or pressure welding, in which case a bore may not be needed.

In a preferred embodiment of the invention there is provided a combination of a relay and mounting bracket comprising a relay having a body with a terminal end portion provided with one or more electrical terminal connectors and a base end portion adapted for engagement with the bracket, wherein the bracket is provided with one or more attachment features which facilitate the mounting of the bracket to an external object or surface when the bracket is engaged with the base end portion of the relay, wherein an engagement between the base end portion and the bracket is made by the co-operation of one or more protruding nubs with one or more constraint features which provide axial constraint against withdrawing of the base end portion from the bracket aperture or seat, wherein the bracket comprises a generally annular member which defines a cylindrical aperture or seat sized to accommodate the base end portion therein, and wherein the body portion is provided with said one or more protruding nub or nubs are radially extending and are each radially oversized with respect to the radius of the bracket aperture or seat, the aperture or seat having an inside surface provided with one or more axially extending open bypass slots each capable of receiving an oversized nub when circumferentially aligned therewith, so that the base end portion may axially enter the bracket aperture or recess with the nubs passing through the slots, and wherein said inside surface of the aperture or recess is further provided with one or more inwardly directed shoulder features, sized to accommodate the nub or nubs therein but providing axial constraint which prevents axial withdrawal of the nub or nubs when the shoulder feature covers the nub, the arrangement being such that the relay base portion may be engaged with the bracket by aligning the nub or nubs with the axial slots, and then twisting the bracket with respect to the base portion so that the nub or nubs are accommodated in a shoulder feature or features, which shoulder feature or features prevent axial disengagement of the base portion from the bracket by acting upon the nub or nubs.

Each nub may have any shape capable of snagging a constraint feature, but each preferably has the form of a generally rectilinear section block having the form of annular sector. Each recess for constraining the nub preferably has the form of an annular sector cut-out in the aperture inside surface.

The terminal end portion of the relay is in certain embodiments typically too large to be passed through the bracket aperture, so that the bracket cannot pass beyond the terminal end portion. This means that the bracket can only be engaged with the relay base portion after passing the base portion and being drawn back onto the base portion and its associated nub or nubs.

Following is a description by way of example only and with reference to the figures of the drawings of modes for putting the invention into practice.

In the figures:
Figure 1A is a top plan view of a prior art heavy duty relay with a fixed bracket for panel mounting.
Figure 1B is a top plan view of a similar prior art relay with a fixed bracket having an alternative rotational orientation.
Figures 2A, 2B and 2C are isometric three quarter views from above of a relay and bracket combination in accordance with a first embodiment of the present invention.
Figure 3A is a top plan view of the bracket shown in figure 2.
Figure 3B is an underside plan view of the same bracket.
Figure 4 is a top plan schematic view of a relay and bracket combination in accordance with the present invention.
Figure 5 is an underside view of a bracket used in a bracket and relay combination in accordance with a second embodiment of the invention, showing the location of nubs carried by a relay body (not shown), along with a magnified portion showing the detail of the bracket.
Figure 6A is part side view of a relay used in the second embodiment.
Figure 6B is a part cross-sectional side view through the plane represented by the line A-A' in figure 5.

### Prior Art

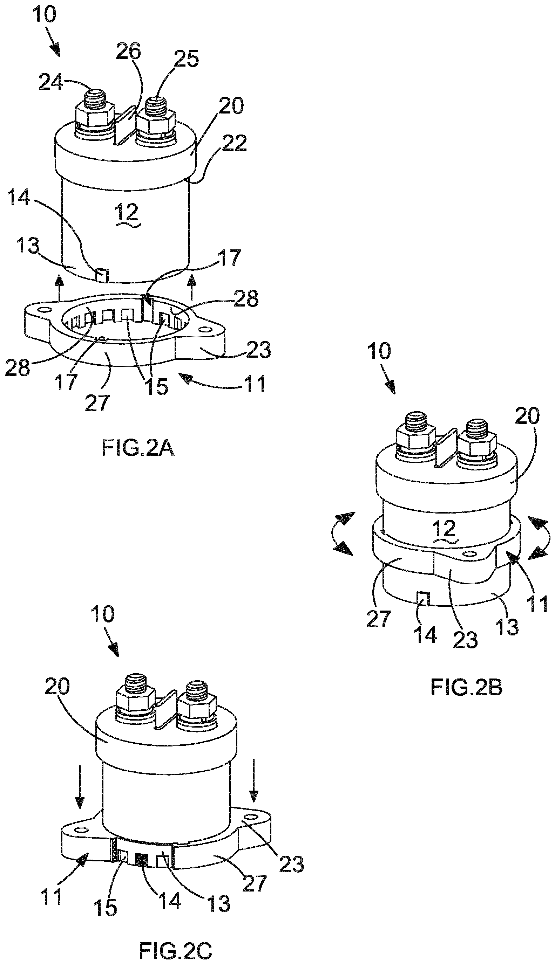

In figure 1A a prior art heavy duty relay (also known as a contactor) is shown generally as 1. The relay comprises a generally cylindrical body portion 2 having a top face 3 which is provided with two upstanding diametrically spaced apart screw threaded main terminals 4,5 each provided with a nut and spring washer. A central upstanding fin 6 is disposed equidistant between the main terminals (a similar arrangement is shown in figure 2). A pair of electromagnetic coil terminals 9 (for activating the device) are upstanding from one side of the top face. A base region of the device is provided with a fixed mounting bracket which includes two diametrically opposed cheek portions 7,8. The cheek portions are each provided with a vertical mounting bore. The device may be attached to an underlying panel (or some other mounting location) by means of screws or bolts or rivets or the like (not shown). A variant of the device is shown in figure 1B in which the fixed mounting bracket has an orientation 90 degrees offset as compared to the device of figure 1B.

### First embodiment

A first embodiment of a combination heavy duty relay 10 and a mounting bracket 11 is shown in figure 2. The relay 10 has a cylindrical body portion 12. The cylindrical body portion has a base region 13 provided with two diametrically opposed nubs in the form of square section, curved sector blocks 14 (only one visible in figure 2). projecting radially from the body portion surface. There is a cylindrical upper body portion 20 which is provided with two upstanding screw threaded main terminals 24, 25 which are provided with associated mounting nuts and spring washers. There is a central upstanding fin 26 to prevent shorting of terminal contacts between the terminals. The upper body portion in this embodiment is larger in diameter than the body portion 13 below, so a shoulder 22 is formed at the junction of the two portions.

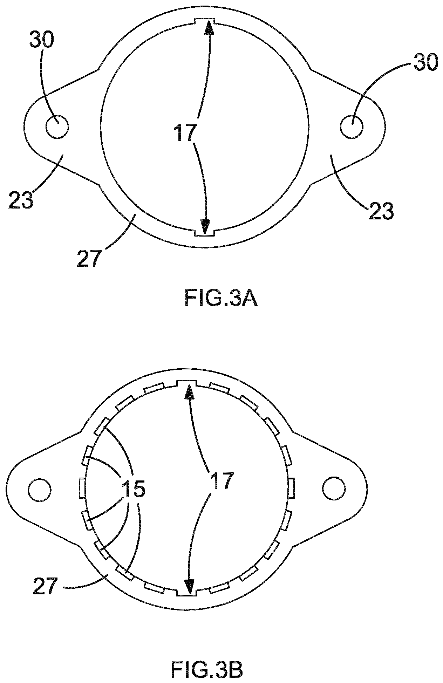

A mounting bracket is a unitary cast or moulded generally annular member 27 which is formed with diametrically opposed cheek portions 23, each with a bore 30 best seen in figures 3A and 3B. The annular member has an inside cylindrical surface 28 which is sized to provide a sliding fit for the body portion 12 of the relay. The shoulder 22 prevents the relay from falling through the bracket. The inside surface 28 is formed with a series of downward opening inset recesses or pockets 15 (see also figure 3B), each having a rectilinear circular sector form which is sized to match and accommodate blocks 14 therein. The inside surface is also formed with two diametrically opposed bypass slots 17 (see figure 3A) which are recessed into the member surface and are open at both ends. These slots 17 are sized and disposed so as to align and co-operate with the blocks 14 when the bracket and relay are manipulated into a bypass orientation. In this orientation the bracket 27 may be slipped onto the base region 13 of the relay body, with the blocks passing through the bypass slots 17 as shown in figure 2A until the bracket is sits around the body portion 12, per figure 2B. The bracket is then free to be rotated with respect to the body portion. Once a desired orientation has been achieved, the bracket may be axially displaced downwards so that the blocks 14 enter the (closest) aligned recesses 15 and engage therewith, as shown in the cutaway view of figure 2C. The bracket is then fixed against rotation with respect to the relay body. When the mounting bracket is fixed to an underlying surface and bolted, riveted or screwed into place the relay is securely retained in the selected orientation. By tailoring the tolerances between blocks 14 and recesses 15 a close, wobble-free sliding or interference fit can be obtained. In one example the blocks 14 are slightly axially taller than the recesses 15, so that when the mounting bracket is secured flush to a flat substrate via the cheek bores, the bracket urges onto a top surface of the blocks so as to hold the relay securely and tightly.

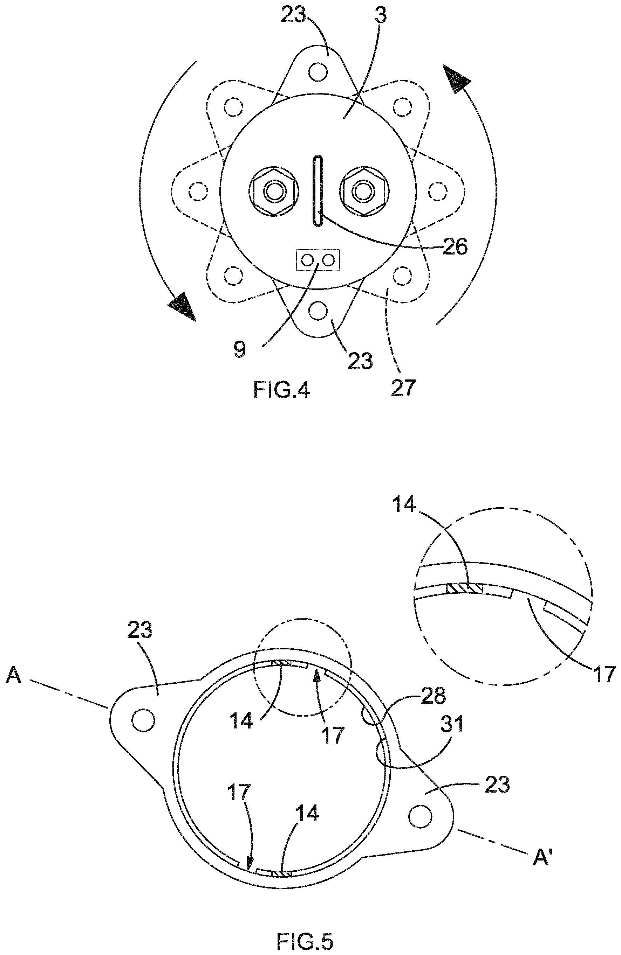

In this way the bracket orientation can be tailored to a desired one of a range of possible positions corresponding to recess and block pair engagements, as shown in figure 4 in which four possible orientations are shown (although more orientations may be available depending upon the number of recess pairs).

### Second embodiment

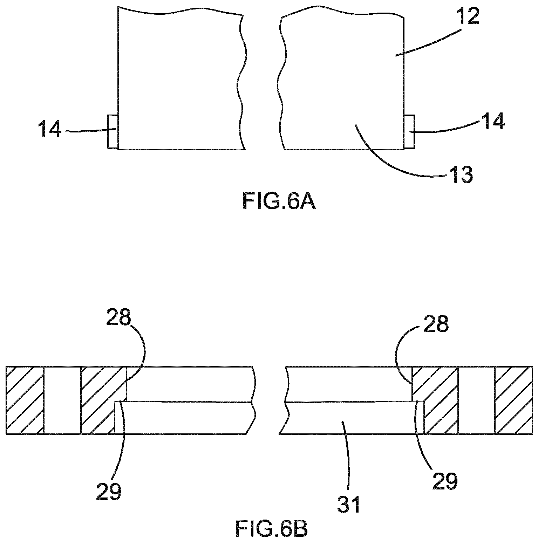

In this embodiment an alternative bracket (figure 5) is used in the combination of mounting bracket and relay. The relay (not shown in figure 5) is unchanged and has two nubs (shown as blocks) the position and profile of which is shown at 14. These blocks are radially projecting, as shown in figure 6. However, in this embodiment, the inside surface 28 of the bracket member is formed with a continuous annular recess 31 (rather than a series of discrete recess pockets) at a lower end region of the inside surface of the bracket member. This forms an annular shoulder 29 shown in figure 6. The pair of axial bypass slots 17 remain and interrupt the annular shoulder at two diametrically opposed locations.

This arrangement operates in a similar way as the first embodiment, with a few important differences. The rotational orientation of the relay is continuously variable as the blocks are free to rotate in the annular recess to adopt a desired relay orientation (leaving aside the bypass slots where there is no constraint). The annular recess of course provides little by way of rotational constraint (in the absence of discrete recess walls which co-operate with the blocks). Thus the surface of the annular shoulder 29 may be roughened or textured or otherwise treated so as to mechanically key or adhere to an upper (co-operating) surface of the blocks 14. This block surface may itself be roughened, textured or otherwise treated to enhance the fixing effect. As with the first embodiment the blocks 14 may have a height which is slightly greater than that of the annular recess, thereby causing the block to be squeezed axially by the shoulder 29 when the bracket is tightened onto the underlying substrate or panel.

In certain aspects the present invention allows a mounting bracket to be attached to a relay or contactor in a chosen orientation, regardless of whether the upper end region of the device has greater bulk or diameter or protrusions or other irregularity which would prevent the bracket from being pulled down over the upper end of the device. In addition to allowing the user to select an optimum mounting orientation / configuration, the combination provides the option of multiple mounting configurations for different applications using only one set of components (i.e. one relay - bracket combination).

In some embodiments, the invention allows the application of a mounting bracket to fit onto a device with an upper portion having a larger diameter or cross sectional area than the bracket aperture. The upper portion of the device may have a regular or irregular cross sectional shape or profile.

In certain embodiments the bracket has a circular hole the diameter of which is greater than the diameter of the lower portion of the device, preferably a sliding fit. The bracket may have slots or recesses disposed such that they coincide with nubs on the device when appropriately rotationally oriented.

The bypass slots are open through the thickness (depth) of the bracket such that the nubs can pass through them without hindrance. On the underside of the bracket there are recesses, the angular spacing of which also coincides with the angular spacings corresponding nubs on the device, but these recesses are blind, i.e. they do not pass through the entire thickness of the bracket. The depth of these blind keyways matches, or is slightly less than the height of the nubs (or blocks) on the device.

It can be seen therefore that the open bypass slots allow the lower end region of the device to be inserted through the hole in the bracket. By rotating the bracket the nubs/blocks on the device can be aligned with any pair of the blind recesses, thus giving multiple angular relationships between device and bracket.

In another aspect of the invention the plurality of discrete blind recesses is replaced by a continuous recess on the underside of the bracket. The depth of this recess would typically be marginally less than the depth of the nubs/blocks. Thus when the bracket is tightened down onto the panel, the clamping action of the bracket onto the nubs/blocks will hold the device secure. The advantage of this alternative is that there are an unlimited number of positions of the bracket relative to the device.

The underside of the recess in the bracket and the interfacing top surface of the nubs/blocks may have a textured surface to provide a degree of positive mechanical fixing when the bracket is tightened down onto the mounting plate. Other forms of mechanical fixing or keying may be provided, such as by the provision of inter-engaging saw tooth profile elements.

In use the relay body according to certain embodiments or aspects of the invention as hereinbefore described is introduced to the bracket and the base end portion of the relay is axially threaded through the bracket aperture, with the nub or nubs aligned with the bypass slots. Once the nubs have passed the slots, the relay body may be rotated with respect to the bracket until a desired relay body orientation is achieved. In cases where several discrete recesses (or constraint features) are distributed around the aperture (or seat) inner surface, the closest discrete recess to the desired orientation is chosen. In cases where the constraint feature represents a substantially continuous feature (such as an annular lip or shoulder) the desired orientation may be adopted without adjusting to a closest discrete recess. The fixing of the mounting bracket to an underlying surface or substrate serves to fix the bracket to the relay (or vice versa) so that the relay is held in the desired orientation for integration into an electrical circuit. The use of bypass slots avoids the need for the bracket to slide over a top (terminal) end of the relay body when engaging therewith. Hence any terminal end portion shape and configuration can be used, especially those in which the terminal end portion is more bulky, or irregular, than the relay body base end portion which is engaged with the bracket.

In summary, the present invention relates to the field of electrical relays such as heavy duty relays, also known as contactors. In particular the invention relates to a bracket a relay and bracket combination which permits the relay to be mounted on a surface or panel in a plurality of angular rotational orientations. There is provided a relay and mounting bracket combination comprising a relay having a body with a terminal end portion provided with one or more electrical terminal connectors and a base end portion adapted for engagement with the bracket, wherein the bracket is provided with one or more attachment features which facilitate the mounting of the bracket to an external object or surface when the bracket is engaged with the base end portion of the relay, wherein an engagement between the base end portion and the bracket is made by the co-operation of one or more protruding nubs with one or more constraint features which provide axial constraint against withdrawing of the base end portion from the bracket aperture or seat. The bracket is preferably provided with a generally annular aperture or seat sized to accommodate the base end portion therein. The inside surface of the aperture or recess may be provided with at one or more inwardly directed shoulder features, sized to accommodate the nub therein but providing axial constraint which prevents axial withdrawal of the nub when the shoulder feature covers the nub. The arrangement is such that the relay base portion may be engaged with the bracket by aligning the nub or nubs with open axial slots, and then twisting the bracket with respect to the base portion so that the nub is accommodated in a shoulder feature, which shoulder feature blocks disengagement of the base portion from the bracket by acting upon the constrained nub or nubs.

## Claims

1. A relay (10) and mounting bracket (11) combination comprising a relay having a body (12) with longitudinal axis defined between a terminal end portion (20) provided with one or more electrical terminal connectors (24,25) and a base end portion (13) adapted for engagement with the bracket, wherein the bracket is provided with one or more attachment features (23,30) which facilitate the mounting of the bracket to an external object or surface when the bracket is engaged with the base end portion of the relay, wherein the engagement between the base end portion and the bracket is made by the inter-engagement of one or more protruding nubs (14) with one or more constraint features (15, 22) thereby providing axial constraint against withdrawing of the base end portion from engagement with the bracket, said one or more nubs and one or more constraint features being configured so as to be capable of co-operating at any one of a plurality of rotational orientations of the base end portion with respect to the bracket, whereby the relay may be mounted on the bracket in a selected one of a plurality of rotational orientations,
**characterised in that** the bracket comprises a member (27) defining a generally cylindrical aperture or seat sized to accommodate the base end portion (13) in each of the rotational orientations thereof with respect to the bracket.

2. A combination as claimed in claim 1 wherein the base end portion (13) of the relay body is generally cylindrical in form.

3. A combination as claimed in claim 2 wherein the base end portion of the relay body is a sliding fit in the generally cylindrical aperture or seat.

4. A combination as claimed in claim 2 or claim 3 wherein said one or more protruding nubs (14) are radially extending from the base end portion (13).

5. A combination as claimed in any of the preceding claims wherein the aperture or seat is provided with said one or more constraint feature (15, 22, 29).

6. A combination as claimed in claim 5 wherein the constraint feature comprises an annular lip or shoulder (29) provided on or in the aperture or seat of the bracket.

7. A combination as claimed in claim 6 wherein said lip or shoulder (29) provides constraint against axial displacement of the nub or nubs through a continuous range of relay body rotational positions with respect to the bracket.

8. A combination as claimed in claim 7 wherein at least a portion of the nub-facing side of the lip or shoulder (29) is provided with a surface treatment which promotes mechanical keying of the nub or nubs with the lip or shoulder (29), such as surface roughening or texturing or saw tooth profiling.

9. A combination as claimed in claim 5 wherein the constraint features comprise a series of circumferentially spaced-apart discrete recesses (15) formed on an inside wall of the bracket aperture or seat, the engagement of a nub (14) and a recess providing constraint against axial movement of the nub, each recess corresponding to a discrete rotational position of the relay body with respect to the bracket.

10. A combination as claimed in claim 9 wherein each recess (15) comprises a roof portion which provides axial constraint, side walls which provide rotational constraint and an open base portion which permits entry of the nub (14) into the recess, and wherein the nub may be sized and configured to be a sliding fit in each recess.

11. A combination as claimed in any of claims 5 to 10 wherein the one or more nubs (14) have an axial height which is greater than an axial space provided between the constraint feature or features and a surface to which the bracket is to be mounted so that when the bracket is placed base edge-on to the mounting surface and fixed with the base edge flush to the surface, a nub (14) in the constraint feature (15) will be axially compressed.

12. A combination as claimed in any of the preceding claims wherein one or more open slots (17) are provided for said one or more nubs (14) to bypass the constraint feature or features when rotationally aligned with an open slot (17), after which the nub may be rotationally displaced so as to become aligned with a position in which the nub can be axially constrained by the constraint feature.

13. A combination as claimed in claim 12 wherein the bracket comprises a generally annular member (27) having an inside surface (28) which defines the aforementioned aperture, said one or more open slots (17) are provided in said inside surface, and said one or more nubs (14) are provided projecting radially outwardly from the base end portion of the relay.

14. A combination as claimed in claim 13 wherein there are two slots (17) and two corresponding nubs (14).

15. A combination as claimed in claim any preceding claim wherein the bracket is a unitary member.

## Patentansprüche

1. Kombination von Relais (10) und Anbauhalterung (11), umfassend ein Relais mit einem Körper (12) mit einer Längsachse, die zwischen einem mit einem oder mehreren elektrischen Klemmenverbindern (24, 25) versehenen Klemmenendabschnitt (20) und einem für den Eingriff mit der Halterung angepassten Basisendabschnitt (13) definiert ist, wobei die Halterung mit einem oder mehreren Befestigungsmerkmalen (23, 30) versehen ist, die das Anbringen der Halterung an einem externen Gegenstand oder einer externen Oberfläche ermöglichen, wenn sich die Halterung mit dem Basisendabschnitt des Relais im Eingriff befindet, wobei der Eingriff zwischen dem Basisendabschnitt und der Halterung durch den gegenseitigen Eingriff von einer oder mehreren vorstehenden Nasen (14) mit einem oder mehreren Hemmmerkmalen (15, 22) erfolgt, wodurch eine axiale Hemmung gegen das Herausziehen des Basisendabschnitts aus dem Eingriff mit der Halterung bereitgestellt wird, wobei die eine oder die mehreren Nasen und ein oder mehrere Hemmmerkmale derart konfiguriert sind, dass sie fähig sind, in einer beliebigen einer Vielzahl von Drehorientierungen des Basisendabschnitts in Bezug auf die Halterung zusammenzuwirken, wodurch das Relais in einer ausgewählten einer Vielzahl von Drehorientierungen an der Halterung angebracht werden kann,
**dadurch gekennzeichnet, dass** die Halterung ein Element (27) umfasst, das eine allgemein zylindrische Öffnung oder Aufnahme definiert, die bemessen ist, um den Basisendabschnitt (13) in jeder der Drehorientierungen desselben in Bezug auf die Halterung aufzunehmen.

2. Kombination nach Anspruch 1, wobei der Basisendabschnitt (13) des Relaiskörpers eine allgemein zylindrische Form aufweist.

3. Kombination nach Anspruch 2, wobei der Basisendabschnitt des Relaisköpers in einer Gleitpassung in der allgemein zylindrischen Öffnung oder Aufnahme sitzt.

4. Kombination nach Anspruch 2 oder Anspruch 3, wobei sich die eine oder die mehreren vorstehenden Nasen (14) radial von dem Basisendabschnitt (13) erstrecken.

5. Kombination nach einem der vorangehenden Ansprüche, wobei die Öffnung oder Aufnahme mit dem einen oder den mehreren Hemmmerkmalen (15, 22, 29) versehen ist.

6. Kombination nach Anspruch 5, wobei das Hemmmerkmal eine ringförmige Lippe oder einen ringförmigen Absatz (29) umfasst, die bzw. der an oder in der Öffnung oder Aufnahme der Halterung bereitgestellt ist.

7. Kombination nach Anspruch 6, wobei die Lippe oder der Absatz (29) über einen kontinuierlichen Bereich von Relaiskörper-Drehlagen in Bezug auf die Halterung hinweg eine Hemmung gegen die axiale Verschiebung der Nase oder der Nasen bereitstellt.

8. Kombination nach Anspruch 7, wobei mindestens ein Abschnitt der nasenzugewandten Seite der Lippe oder des Absatzes (29) mit einer Oberflächenbehandlung versehen ist, die die mechanische Verkeilung der Nase oder der Nasen mit der Lippe oder dem Absatz (29) fördert, wie etwa eine Aufrauhung oder Strukturierung oder Sägezahnprofilierung der Oberfläche.

9. Kombination nach Anspruch 5, wobei die Hemmmerkmale eine Reihe von in Umfangsrichtung beanstandeten diskreten Aussparungen (15) umfassen, die an einer Innenwand der Halterungsöffnung oder -aufnahme gebildet sind, wobei der Eingriff einer Nase (14) und einer Aussparung Hemmung gegen die axiale Bewegung der Nase bereitstellt, wobei jede Aussparung einer diskreten Drehlage des Relaiskörpers in Bezug auf die Halterung entspricht.

10. Kombination nach Anspruch 9, wobei jede Aussparung (15) einen Dachabschnitt, der axiale Hemmung bereitstellt, Seitenwände, die Drehhemmung bereitstellen und einen offenen Basisabschnitt, der das Eindringen der Nase (14) in die Aussparung zulässt, umfasst, und wobei die Nase bemessen und konfiguriert sein kann, um in einer Gleitpassung in jeder Aussparung zu sitzen.

11. Kombination nach einem der Ansprüche 5 bis 10, wobei die eine oder die mehreren Nasen (14) eine axiale Höhe aufweisen, die größer ist als ein axialer Zwischenraum, der zwischen dem Hemmmerkmal oder den Hemmmerkmalen und einer Oberfläche, an der die Halterung angebracht werden soll, bereitgestellt ist, sodass, wenn die Halterung mit dem Basisrand voran auf die Anbaufläche platziert und mit dem Basisrand an der Oberfläche anliegend fixiert wird, eine Nase (14) in dem Hemmmerkmal (15) axial unter Druck gesetzt wird.

12. Kombination nach einem der vorangehenden Ansprüche, wobei ein oder mehrere offene Schlitze (17) für die eine oder die mehreren Nasen (14) bereitgestellt sind, um das Hemmmerkmal oder die Hemmmerkmale zu umgehen, wenn ihre Drehlage auf einen offenen Schlitz (17) ausgerichtet ist, wobei die Nase danach durch Drehung verschoben werden kann, um auf eine Position ausgerichtet zu werden, in der die Nase von dem Hemmmerkmal axial gehemmt werden kann.

13. Kombination nach Anspruch 12, wobei die Halterung ein allgemein ringförmiges Element (27) umfasst, das eine innere Oberfläche (28) aufweist, die die vorangehend erwähnte Öffnung definiert, wobei der eine oder die mehreren offenen Schlitze (17) in der inneren Oberfläche bereitgestellt sind und die eine oder die mehreren Nasen (14) von dem Basisendabschnitt des Relais radial nach außen vorstehend bereitgestellt sind.

14. Kombination nach Anspruch 13, wobei zwei Schlitze (17) und zwei entsprechende Nasen (14) vorhanden sind.

15. Kombination nach einem der vorangehenden Ansprüche, wobei es sich bei der Halterung um ein unitäres Element handelt.

## Revendications

1. Combinaison d'un relais (10) et d'un support de montage (11) comprenant un relais ayant un corps (12) pourvu d'un axe longitudinal délimité entre une partie d'extrémité de bornes (20) pourvue d'un ou plusieurs connecteurs de borne électrique (24, 25) et une partie d'extrémité de base (13) conçue pour venir en prise avec le support, dans laquelle le support est pourvu d'un ou plusieurs éléments de fixation (23, 30) qui facilitent le montage du support sur un objet ou une surface externe lorsque le support est mis en prise avec la partie d'extrémité de base du relais, la mise en prise entre la partie d'extrémité de base et le support étant réalisée par la mise en prise mutuelle d'un ou plusieurs tenons saillants (14) avec un ou plusieurs éléments de contrainte (15, 22) ce qui fournit une contrainte axiale qui s'oppose au retrait de la partie d'extrémité de base de la mise en prise avec le support, le ou lesdits tenons et le ou lesdits éléments de contrainte étant conçus de sorte à pouvoir coopérer dans l'une quelconque d'une pluralité d'orientations de rotation de la partie d'extrémité de base par rapport au support, par quoi le relais peut être monté sur le support dans l'une choisie d'une pluralité d'orientations de rotation,
**caractérisée en ce que** le support comprend un membre (27) qui délimite une ouverture ou un siège généralement cylindrique dimensionné de sorte à loger la partie d'extrémité de base (13) dans chacune de ses orientations en rotation par rapport au support.

2. Combinaison selon la revendication 1, dans laquelle la partie d'extrémité de base (13) du corps du relais est de forme généralement cylindrique.

3. Combinaison selon la revendication 2, dans laquelle la partie d'extrémité de base du corps du relais est un ajustement coulissant dans l'ouverture ou le siège généralement cylindrique.

4. Combinaison selon la revendication 2 ou la revendication 3, dans laquelle le ou lesdits tenons saillants (14) s'étendent radialement depuis la partie d'extrémité de base (13).

5. Combinaison selon l'une quelconque des revendications précédentes, dans laquelle l'ouverture ou le siège est pourvu du ou desdits éléments de contrainte (15, 22, 29).

6. Combinaison selon la revendication 5, dans laquelle l'élément de contrainte comprend une lèvre ou un épaulement annulaire (29) placé sur ou dans l'ouverture ou le siège du support.

7. Combinaison selon la revendication 6, dans laquelle ladite lèvre ou ledit épaulement (29) exerce une contrainte contre un déplacement axiale du ou des tenons à travers une plage continue de positions en rotation du corps du relais par rapport au support.

8. Combinaison selon la revendication 7, dans laquelle au moins une partie du côté faisant face aux tenons de la lèvre ou de l'épaulement (29) est pourvue d'un traitement de surface qui favorise le clavetage mécanique du ou des tenons avec la lèvre ou l'épaulement (29), comme une rugosité ou une texture de surface ou un profil en dents de scie.

9. Combinaison selon la revendication 5, dans laquelle les éléments de contrainte comprennent une série d'évidements discrets espacés circonférentiellement (15) formés sur une paroi interne de l'ouverture ou du siège du support, la mise en prise d'un tenon (14) et d'un évidement assurant une contrainte contre un mouvement axial du tenon, chaque évidement correspondant à une position en rotation discrète du corps du relais par rapport au support.

10. Combinaison selon la revendication 9, dans laquelle chaque évidement (15) comprend une partie toit qui assure une contrainte axiale, des parois latérales assurant une contrainte en rotation et une partie de base ouverte qui permet l'entrée du tenon (14) dans l'évidement, le tenon pouvant être dimensionné et conçu pour être en ajustement coulissant dans chaque évidement.

11. Combinaison selon l'une quelconque des revendications 5 à 10, dans laquelle le ou les tenons (14) ont une hauteur axiale qui est supérieure à un espace axial fourni entre le ou les éléments de contrainte et une surface sur laquelle le support est destiné à être monté de telle sorte que lorsque le support est placé avec le bord de base sur la surface de montage et fixé avec le bord de base à raz de la surface, un tenon (14) dans l'élément de contrainte (15) sera comprimé axialement.

12. Combinaison selon l'une quelconque des revendications précédentes, dans laquelle une ou plusieurs fentes ouvertes (17) sont ménagées à destination du ou desdits tenons (14) afin de leur permettre de contourner le ou les éléments de contrainte lorsqu'ils sont alignés en rotation avec une fente ouverte (17), après quoi le tenon peut être déplacé en rotation de sorte à venir s'aligner avec une position dans laquelle le tenon peut être axialement contraint par l'élément de contrainte.

13. Combinaison selon la revendication 12, dans laquelle le support comprend un membre généralement annulaire (27) ayant une surface interne (28) qui délimite l'ouverture susmentionnée, la ou lesdites fentes ouvertes (17) étant ménagées dans ladite surface interne, et le ou lesdits tenons (14) étant fournis se projetant radialement vers l'extérieur depuis la partie d'extrémité de base du relais.

14. Combinaison selon la revendication 13, dans laquelle deux fentes (17) et deux tenons (14) correspondants sont présents.

15. Combinaison selon l'une quelconque des revendications précédentes, dans laquelle le support est un membre monobloc.
